**Europäisches Patentamt**

**European Patent Office**

**Office européen des brevets**

(19)

(11) Veröffentlichungsnummer: **0 283 863 B1**

(12) **EUROPÄISCHE PATENTSCHRIFT**

(45) Veröffentlichungstag der Patentschrift: **29.05.91**

(51) Int. Cl.5: **B60N 2/48**

(21) Anmeldenummer: **88103781.6**

(22) Anmeldetag: **10.03.88**

(54) Höhen- und neigungsverstellbare Kopfstütze für Kraftfahrzeugsitze.

(30) Priorität: **19.03.87 DE 3708895**

(43) Veröffentlichungstag der Anmeldung:
**28.09.88 Patentblatt 88/39**

(45) Bekanntmachung des Hinweises auf die
Patenterteilung:
**29.05.91 Patentblatt 91/22**

(84) Benannte Vertragsstaaten:
**AT BE DE ES FR GB IT LU NL**

(56) Entgegenhaltungen:
**DE-A- 3 200 321**
**DE-U- 8 620 376**
**FR-A- 2 467 730**

(73) Patentinhaber: **PAUL DIEHL KG**
**Nerotal 40**
**W-6200 Wiesbaden(DE)**

(72) Erfinder: **Möhlmann, Wilfried**
**Heinrich-Zille-Strasse 9**
**W-3354 Dassel(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

## Beschreibung

Die Erfindung betrifft eine höhen- und neigungsverstellbare Kopfstütze für Kraftfahrzeugsitze mit einem gegebenenfalls von einem Polsterkörper und einem Polsterbezug umgebenen Rahmenkörper, der zwei seitlich beabstandete, nach unten offene und sich im wesentlichen nach oben in den Rahmenkörper erstreckende Hohlräume aufweist, sowie mit zwei an der Rückenlehne des Kraftfahrzeugsitzes befestigbaren Tragstangen, die mit ihren oberen Enden in die Hohlräume hineinragend in diesen verschiebbar geführt sind, und an denen der Rahmenkörper um eine im wesentlichen horizontale, parallel zu der die Tragstangen enthaltenden Ebene verlaufende Schwenkachse begrenzt verschwenkbar ist, wofür die unteren Öffnungen der Hohlräume in einer Richtung senkrecht zur Ebene der Tragstangen ein lichtes Öffnungsmaß aufweisen, das größer ist als die Dicke der Tragstangen in dieser Richtung.

Höhen- und neigungsverstellbare Kopfstützen für Kraftfahrzeugsitze sind bekannt. Vom Typ her kennt man Kopfstützen in Vollkörperausführung wie auch Kopfstützen in sog. Fensterausführung, die aus einem gepolsterten Rahmen bestehen, der in der Mitte ein Sichtfenster freiläßt, da die Sicht aus einem Kraftfahrzeug hinaus im allgemeinen durch die Kopfstützen behindert wird. Von der Verstellbarkeit her kennt man Kopfstützen, bei denen die Höhenverstellung durch Verschieben der Tragstangen innerhalb der Rückenlehne des Fahrzeugsitzes erfolgt und nur die Verschwenkbarkeit der Kopfstütze durch schwenkbare Lagerung der eigentlichen Stütze an den oberen Enden der Tragarme bewerkstelligt wird, wie auch solche Kopfstützen, bei denen die Tragstangen fest an der Rückenlehne des Sitzes angebracht sind, und beide Verstellungsmöglichkeiten innerhalb der Kopfstütze erfolgen.

Die vorliegende Erfindung betrifft bezüglich der Verstellbarkeit der Stütze den zuletzt genannten Typ, sie ist aber sowohl in Zusammenhang mit Vollkörperstützen wie auch mit Fensterstützen anwendbar. Besondere Vorteile ergeben sich jedoch, wie weiter unten noch erläutert werden wird, in Verbindung mit Fensterstützen.

Praktisch sämtliche bekannten Kopfstützen, bei denen beide Verstellmöglichkeiten innerhalb des Kopfstützenkörpers vorgesehen sind, verwenden ein innerhalb dieses Körpers an fester Stelle drehbar gelagertes Führungsteil, durch das hindurch die Tragstange für die Höhenverstellung gegebenenfalls in Zusammenwirken mit Rasteinrichtungen verschiebbar ist. Das Neigen der Kopfstütze erfolgt um die Schwenkachse dieses bzw. dieser Führungsteile. Eine solche Kopfstütze, die der eingangs erwähnten Gattung entspricht, ist beispielsweise aus der DE-OS 32 00 321 bekannt.

Diese Kopfstützen weisen verschiedene Nachteile auf. So müssen die Einrichtungen für das höhenstufenabhängige Einrasten und Arretieren der Kopfstütze bei Aufprall im wesentlichen auf kleinstem Raum an dem schwenkbar gelagerten Führungsteil vorgesehen werden, weswegen diese Einrichtungen meist nur aus Metallteilen herstellbar sind und ein Rasten in Kerben der Tragstange selbst erfordern, wodurch vom Bediener zu überwindende Kraftspitzen auftreten und das Verstellen eine unerwünschte Geräuschentwicklung mit sich bringt. Auch werden aus ästhetischen Gründen die meist an den Tragstangen sichtbaren Rastkerben als nachteilig empfunden. Die Reibungshemmung für die Verschwenkbarkeit der Kopfstützen muß im allgemeinen durch Klemmbuchsen an der Lagerung der Führungsteile erfolgen, wobei mangels ausreichender Hebelarme die Reibungsmomente im allgemeinen durch erhöhte Klemmkräfte erzeugt werden müssen, die wiederum in vielen Fällen metallische Bauteile erfordern. Schließlich kann der Schwenkwinkel der Kopfstütze bei diesen bekannten Ausführungsformen nur unter Vergrößerung des Innenraumes in Abhängigkeit von der Höhenstellung variiert werden.

Der Erfindung liegt die Aufgabe zugrunde, eine Kopfstütze der eingangs bezeichneten Art derart zu verbessern und neu zu gestalten, daß sich bei preisgünstiger Herstellung und einfacher Montierbarkeit verbesserte Kraftflußverhältnisse, sowie eine günstigere und stärker variierbare Verstellbarkeit ergeben.

Diese Aufgabe wird bei einer Kopfstütze der eingangs genannten Art erfindungsgemäß dadurch gelöst, daß die Tragstangen an ihren oberen Enden je mit einem Lagerkörper versehen sind, welcher formschlüssig an den eine Hohlführung für den Lagerkörper bildenden Innenwänden des zugehörigen Hohlraumes anliegend in diesem höhenverschiebbar ist, und daß die im wesentlichen horizontale Schwenkachse im Verhältnis sowohl zu den Tragstangen als auch den Lagerkörpern eine unveränderliche Position aufweist. Position aufweist.

Diese neue Grundanordnung des Verstellmechanismus innerhalb einer Kraftfahrzeugsitz-Kopfstütze läßt eine Mehrzahl von Abwandlungsmöglichkeiten zu, die spezielle Vorteile mit sich bringen, wie sich im einzelnen aus der folgenden Beschreibung noch ergeben wird. Allen Ausführungsformen gemeinsam ist, daß an den oberen Enden der Tragstangen je ein Lagerkörper vorgesehen ist, der sich zusammen mit der Tragstange in der Hohlführung der Kopfstütze auf- und abbewegt, und innerhalb dessen die Schwenkachse liegt, um die die Kopfstütze neigbar ist. Da sich somit auch die Lage dieser Schwenkachse gegenüber dem Kopfstützenkörper bei der Höhenverstellung verändert, ergeben sich bei beispielsweise gleicher Begrenzung der unteren Öffnungen der Hohlführungen, durch die die Tragstangen aus der Kopfstütze austreten, um so größere Schwenkwinkel, je höher die Kopfstütze gestellt wird, wenn diese Schwenkwinkel nicht bei höheren Einstellungen absichtlich durch zusätzliche Begrenzungsmittel wieder beschränkt werden. Ein solcher vergrößerter Schwenkwinkel bei höhergestellter Kopfstütze ist in vielen Fällen jedoch erwünscht.

Für die Reibungshemmung beim Verschwenken der Kopfstütze kann die gesamte Innenweite der Hohlführung als Kraftarm ausgenutzt werden, weswegen nur verhältnismäßig geringe Reibungskräfte zwischen den Lagerkörpern und den Innenwandungen der Hohlführung erforderlich sind, um ein bestimmtes Reibungsmoment zu erzeugen. Umgekehrt läßt sich das Reibungsmoment gegenüber herkömmlichen Ausführungen mit der erfindungsgemäßen Ausführung vergrößern. Auch für die Höhenverstellung der Kopfstütze selbst stehen zwischen dem Lagerkörper und den Innenwandungen der Hohlführung erheblich vergrößerte Reibungsflächen zur Verfügung, so daß eine Selbsthemmung in der Höhenverstellung der Kopfstützen weitgehend ohne zusätzliche hohe Rastkräfte metallisch-mechanischer Bauteile erreicht werden kann.

Bei einer ersten Grundvariante der erfindungsgemäßen Ausführung sind sämtliche Teile des Lagerkörpers fest mit den Tragstangen verbunden und diesen gegenüber nicht beweglich. Dies bedeutet, daß für ein Verschwenken der Kopfstütze diese mit ihrer Hohlführung praktisch um den feststehenden Lagerkörper verdreht werden muß. Bei dieser Ausführung ist es daher erforderlich, daß der Lagerkörper zumindest im vorgesehenen Schwenkbereich rotationssymmetrisch zur Schwenkachse ausgeführt sein muß.

Bei einer anderen grundsätzlichen Ausführungsform ist der Lagerkörper derart ausgeführt, daß er innerhalb der Hohlführung nur translatorisch verschiebbar, nicht aber verdrehbar ist. Um auch in diesem Fall das Schwenken der Kopfstütze zu ermöglichen, ist innerhalb des Lagerkörpers ein Drehkörper begrenzt drehbar gelagert, der unmittelbar mit dem oberen Ende der Tragstange verbunden ist. An der Austrittsstelle der Tragstange aus dem Lagerkörper muß hierbei natürlich eine entsprechende, im allgemeinen sich erweiternde Öffnung vorgesehen sein, die den erforderlichen Schwenkwinkel der Tragstange mit dem Drehkörper gegenüber dem äußeren Teil des Lagerkörpers zuläßt bzw. ein Verschwenken dieses äußeren Teiles des Lagerkörpers mit der Kopfstütze um den Drehkörper und die Tragstange zuläßt.

Bei einer besonders vorteilhaften Ausführungsform der Erfindung ist das obere Ende der Tragstange oder der fest mit dieser verbundene Lagerkörper bzw. Teil des Lagerkörpers mit einem Anschlagarm versehen, der in eine seitliche Kulissenführung des Hohlraumes eingreift. Der Eingriffspunkt befindet sich vorteilhafterweise oberhalb des Lagerkörpers. Die seitlichen Anschlagskanten dieser Kulissenführung sind dabei zweckmäßigerweise so ausgebildet, daß sie in Höhenabstufungen ausgebildete Vertiefungen aufweisen, in die sich der Anschlagarm bei seiner vorderen oder hinteren Grenzstellung hineinlegt und so die Kopfstütze bei Schwenkanschlag in einer bestimmten Höhenposition festlegt. Diese Möglichkeit wird gleichzeitig dafür ausgenutzt, ein Absenken der Kopfstütze bei Aufprall von vorne zu verhindern, was in vielen Fällen eine Sicherheitsbedingung bei der Konstruktion von Kopfstützen ist.

Die Lagerkörper bestehen zweckmäßigerweise in ihrem an der Hohlführung anliegenden Außenbereich aus einem elastischen Material, so daß sie unter Preßsitz in die Hohlführungen eingeführt werden können. Auch kann es zweckmäßig sein, die gegeneinander gleitenden Oberflächen mit Elementen aus einem reibungserhöhenden Material zu versehen.

Im folgenden wird die Erfindung unter Hinweis auf die beigefügten Zeichnungen im einzelnen noch näher erläutert. In den Zeichnungen stellen dar:

Fig. 1    einen Vertikalschnitt in der Hauptebene einer Kopfstütze durch einen Teil der Kopfstütze in einer ersten Ausführungsform,

Fig. 2    einen Vertikalschnitt durch die Kopfstütze nach Fig. 1 entlang der Linie I-I,

Fig. 3    einen Horizontalschnitt durch die Kopfstütze nach Fig. 1 entlang der Linie II-II,

Fig. 4    eine teilweise vertikal geschnittene Hauptansicht einer weiteren Ausführungsform einer Fensterkopfstütze,

Fig. 5    einen Vertikalschnitt entlang der Linie II-II in Fig. 4,

Fig. 6    einen Horizontalschnitt entlang der Linie III-III in Fig. 4,

Fig. 7    einen Vertikalschnitt entlang der Linie IV-IV in Fig. 4, welcher die Kulissenführung für den Schwenkbegrenzungsanschlag mit den verschiedenen Rastpositionen und Schwenkwinkeln zeigt,

Fig. 8    die teilweise senkrecht geschnittene Hauptansicht einer dritten Ausführungsform einer Fensterkopfstütze,

Fig. 9    einen Vertikalschnitt entlang der Linie I-I in Fig. 8, und

Fig. 10   einen Horizontalschnitt entlang der
          Linie II-II in Fig. 8.

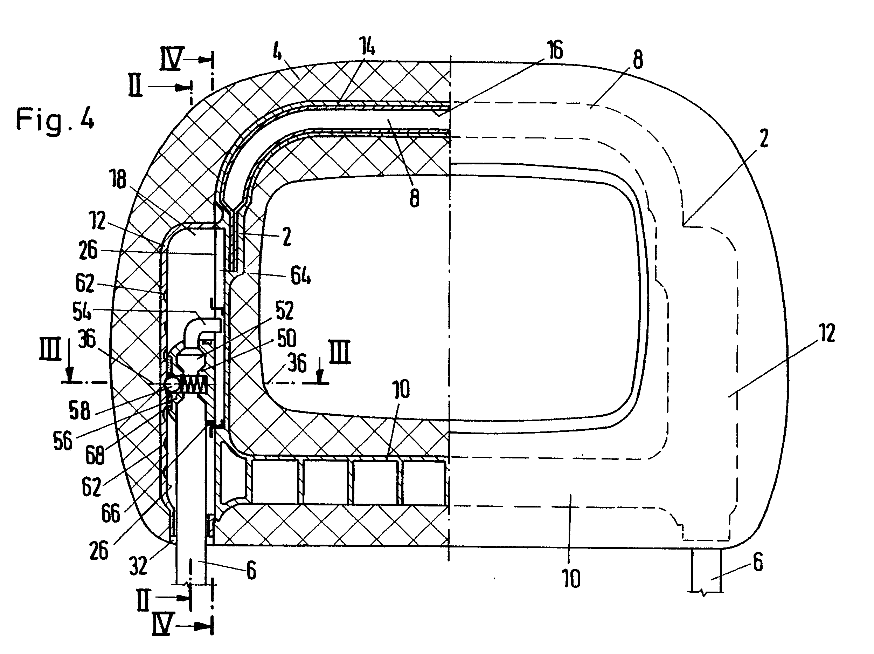

Die im folgenden beschriebenen Ausführungsbeispiele der Erfindung betreffen Fensterkopfstützen, die Ausführungen sind im wesentlichen jedoch analog auch auf Vollkörperkopfstützen anzuwenden. Es sei zuerst die Fig. 4 betrachtet, da sie eine Fensterkopfstütze in voller Hauptansicht darstellt. Die Kopfstütze besteht aus einem Rahmenkörper 2, der in einen Polsterkörper 4, beispielsweise aus formgeschäumtem Polyurethanschaum, eingebettet ist, welcher von einem (nicht dargestellten) textilen Bezug umschlossen ist. Zur Kopfstütze gehören weiterhin die beiden Tragstangen 6, mit denen die Kopfstütze an der Rückenlehne des Fahrzeugsitzes befestigt ist, und von denen nur die oberen Teile in der Zeichnung dargestellt sind.

Der Rahmenkörper 2, der den gesamten Verstellmechanismus der Kopfstütze enthält, setzt sich aus einer oberen Quertraverse 8, aus einer unteren Quertraverse 10 und zwei hohlen Seitenschenkeln 12 zusammen. Soweit zweckmäßig, sind diese Teile aus gespritztem Kunststoff hergestellt. Die obere Quertraverse 8 besteht jedoch aus einer mit einem Kunststoffmantel 14 umspritzten Hohlprofilarmierung 16. Die untere Quertraverse 10 weist eine aus Kunststoff gespritzte Gitterstruktur auf.

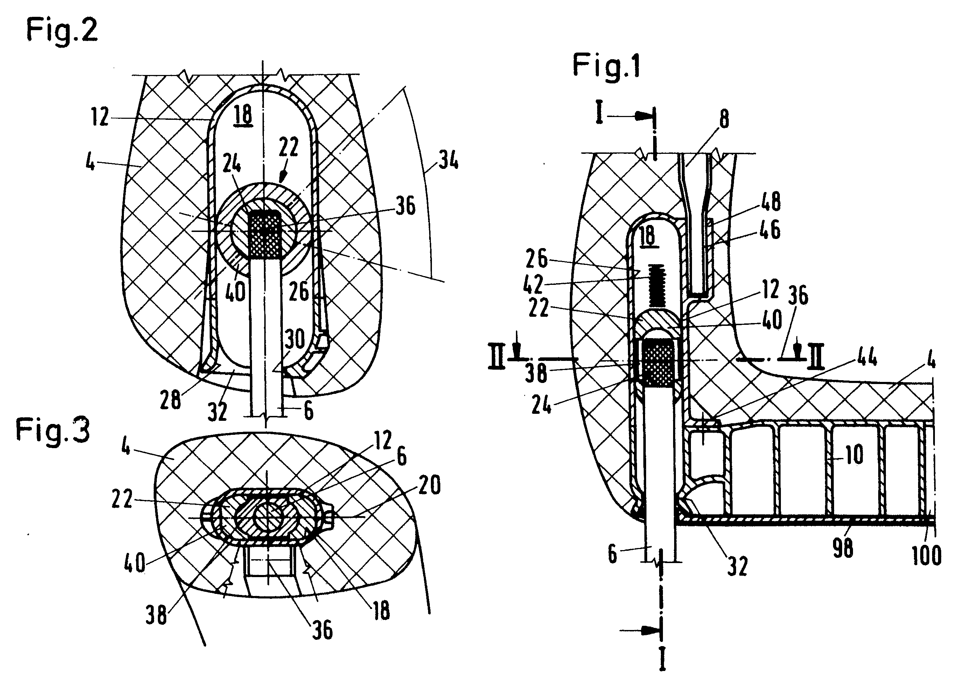

Es wird jedoch jetzt zuerst auf die Fig. 1-3 einer ersten Ausführungsform einer erfindungsgemäßen Kopfstütze Bezug genommen, wobei die Fig. 1 einen Bereich im Vertikalschnitt darstellt, der dem linken unteren Bereich der Kopfstütze der Fig. 4 entspricht.

Den Fig. 1-3 läßt sich entnehmen, daß der eine dargestellte hohle Seitenschenkel 12 des Rahmenkörpers der Kopfstütze einen sich im wesentlichen in senkrechter Richtung erstreckenden Hohlraum 18 von in etwa ovalem Querschnitt (Fig. 3) aufweist, dessen Hauptachse 20 senkrecht zur Ebene der Tragstangen 6 (Zeichenebene der Fig. 1) verläuft. In den Hohlraum 18 ragt von unten die zugehörige Tragstange 6 hinein.

Außerdem ist in dem Hohlraum 18 ein scheibenförmiger Lagerkörper 22 angeordnet, der fest mit dem Ende 24 der Tragstange 6 verbunden ist. Wie aus dem Horizontalschnitt der Fig. 3 erkennbar ist, liegt der Lagerkörper 22 über den größten Bereich seines Umfanges an den parallelen Innenwänden des Hohlraumes 18 an, die somit eine Hohlführung 26 für den Lagerkörper 22 bilden, in der dieser formschlüssig auf- und abbewegbar ist. In der senkrecht zur Verbindungsebene der Tragstangen 6 liegenden Schnittebene der Fig. 2 ist der Lagerkörper 22 rotationssymmetrisch ausgebildet, so daß er in dieser Ebene zusammen mit der Tragstange 6 innerhalb der Hohlführung 26 verdrehbar ist. Diese Drehbewegung wird jedoch durch das zulässige Bewegungsspiel der Tragstange 6 begrenzt, welches durch die Begrenzungspunkte 28 und 30 der unteren Öffnung 32 des Hohlraumes 18 gegeben ist. Es ist aus Fig. 2 erkennbar, daß der durch diese Begrenzungen gegebene mögliche Drehwinkel 34 des Lagerkörpers 22 um so größer ist, je tiefer der Lagerkörper 22 in der Hohlführung 26 steht, bzw. je höher die Kopfstütze gestellt ist. Die Achse 36, um die der Lagerkörper 22 infolge seiner Rotationssymmetrie innerhalb der Hohlführung 26 verdrehbar ist, ist die jeweilige Schwenkachse, um die die Kopfstütze neigbar ist. Die Lage dieser Schwenkachse in bezug auf die Kopfstütze hängt demnach von deren Höhenstellung auf den Tragarm 6 ab.

Der Lagerkörper 22 selbst besteht aus einem um das zu diesem Zweck gerändelte Ende 24 der Tragstange 6 herumgespritzten Kern 38 aus Hartkunststoff, der von einem Mantel 40 aus elastischem Kunststoff umgeben ist. Wird der Mantel 40 in seinen Außenmaßen etwas größer ausgeführt als der lichte Querschnitt des Hohlraumes 18, so kann der Lagerkörper 22 nur unter gewisser Verformung seines Mantels 40 in die Hohlführung 26 eingesetzt werden, wodurch sich ein erwünschter Reibungsschluß zwischen dem Lagerkörper 22 und der Hohlführung 26 ergibt.

Um sowohl bezüglich der Höhen- wie auch der Schwenkstellung der Kopfstütze an den Lagerkörpern 22 gewisse Rastungen zuzulassen, können die Vorder- und Hinterwand der Hohlführung 26 mit Rastkanten oder Rastkerben 42 versehen sein. Entsprechende (nicht gezeigte) komplementäre Rastelemente sind dabei am Außenumfang des Lagerkörpers 22 vorzusehen. Die Rastung zwischen diesen Elementen sollte jedoch nur so stark sein, daß sie bequem von Hand überwunden werden kann. Sie soll lediglich dem Bediener das Gefühl einer gewissen stufenweisen Arretierung vermitteln.

Die Montage des in den Fig. 1-3 gezeigten Rahmenkörpers kann sehr einfach vonstatten gehen, da die als getrenntes Bauteil ausgebildete untere Traverse 10 einen Teil der inneren Seitenwand und der unteren Begrenzung der Öffnung 32 des Hohlraumes 18 bildet. Die Tragstange 6 mit dem Lagerkörper 22 wird in den Hohlraum 18 eingeschoben und dann der diesen enthaltende hohle Seitenschenkel 12 beispielsweise an der Stelle 44 mit der unteren Traverse 10 verbunden. Hierdurch wird die untere Öffnung 32 auf das gewünschte Freimaß begrenzt, und der Lagerkörper 22 ist an einem Verlassen des Hohlraumes 18 nach unten gehindert, wodurch auch gleichzeitig die oberste Höhenstellung der Kopfstütze festgelegt ist. Die tiefste Stellung der Kopfstütze wird durch die obere Begrenzungswand des Hohlraumes 18 bestimmt.

Es ist erkennbar, daß im Ausführungsbeispiel der Fig. 1 die obere Traverse 8 als ein an seinem Ende 46 verjüngtes Rohr ausgebildet ist, welches in eine an den hohlen Seitenschenkel 12 angearbeitete Hülse 48 eingesteckt ist. Diese zusammensteckbare Verbindung ermöglicht es, die obere Traverse 8 zuerst in einen schlauchartigen Textilbezug für die Kopfstütze einzuführen, bevor sie mit den hohlen Seitenschenkeln verbunden ist. Diese Vorgehensweise ist zweckmäßig, wenn der Polsterkörper 4 im montierten Zustand der Kopfstütze in einen schlauchartigen Textilbezug eingeschäumt werden soll.

Eine verbesserte und bevorzugte Ausführungsform einer Fensterkopfstütze ist in den Fig. 4-7 dargestellt. Der Grundaufbau der Kopfstütze gemäß Fig. 4 wurde bereits eingangs erläutert. Es soll jetzt der in den hohlen Seitenschenkeln 12 angeordnete Verstellmechanismus beschrieben werden. Bei dieser Ausführungsform ist innerhalb des Hohlraumes 18 des hohlen Seitenschenkels 12 ebenfalls ein Lagerkörper 50 vorgesehen, der fest mit dem Ende 52 der Tragstange 6 verbunden ist, beispielsweise durch formschlüssiges Umspritzen. Das Ende 52 der Tragstange 6 ist bei dieser Ausführungsform mit einem durchmesserreduzierten Abschnitt über die Oberseite des Lagerkörpers 50 hinaus verlängert und zur Innenseite der Kopfstütze hin abgebogen. Dieses verlängerte Ende bildet einen Anschlagarm 54, dessen Funktion weiter unten noch erläutert wird.

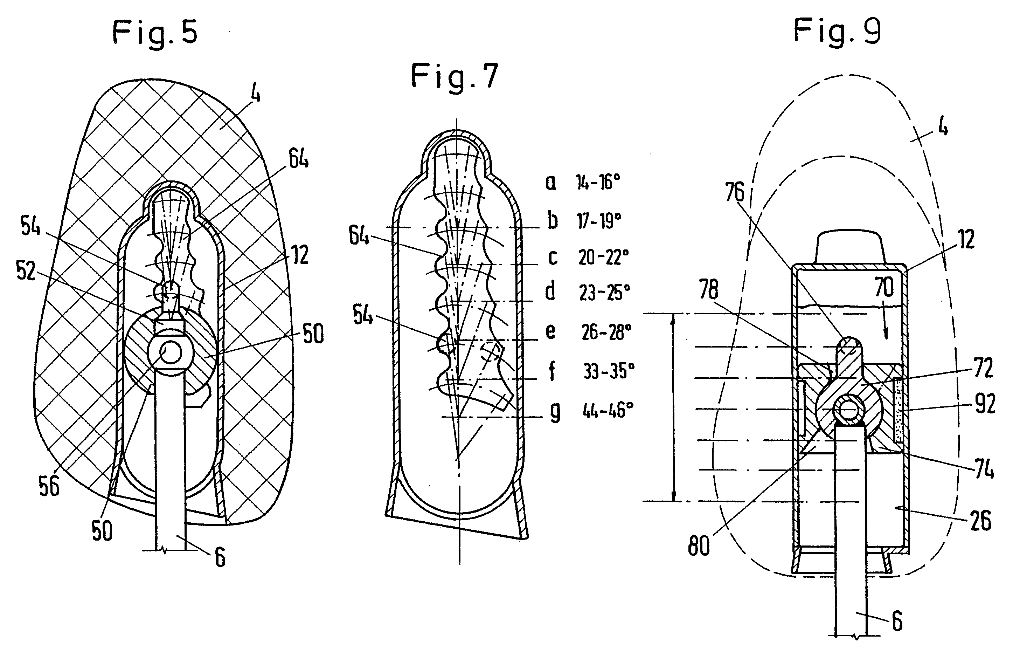

Im Bereich der zentral durch den Lagerkörper 50 verlaufenden Schwenkachse 36 ist das Ende 52 der Tragstange 6, wie sich am besten aus Fig. 5 ergibt, abgeplattet und enthält dort, wie auch der Lagerkörper 50 selbst, eine Bohrung 56, in deren offenem Ende sich eine Rastkugel 58 befindet, die gegen eine in der Bohrung 56 angeordnete Feder 60 abgestützt ist. In der an die Rastkugel 58 angrenzenden Innenwand der Hohlführung 26 befinden sich in bestimmten Höhenabständen Rastmulden 62, in die die Rastkugel bei Höhenverstellung der Kopfstütze einrasten kann.

In die zur Mitte der Kopfstütze hin liegende innere Seitenwand der Hohlführung 26 ist eine Kulissenführung 64 eingelassen, in die, wie sich am besten aus Fig. 4 ergibt, der Anschlagarm 54 eingreift. Die Schwenkbewegung der Kopfstütze wird bei dieser Ausführungsform daher nicht durch Anschlagen der Tragstange 6 gegen die Seiten der unteren Öffnung 32 des Hohlraumes 18 begrenzt, sondern durch Anschlag des Anschlagarmes 54 gegen die Seitenkonturen der Kulissenführung 64. Der zulässige bzw. erwünschte Schwenkwinkel der Kopfstütze in verschiedenen Höhenstellungen kann daher durch eine gezielte Ausbildung der Kulissenführung 64 bestimmt werden.

Für das Ausführungsbeispiel der Fig. 4-6 ist der Verlauf der zugehörigen Kulissenführung in Fig. 7 dargestellt. Es ist dort erkennbar, daß die Seitenflächen der Kulissenführung wellenlinienförmig ausgebildet sind. Wird die Kopfstütze entweder in ihre vorderste oder hinterste Schwenkstellung bewegt, legt sich der Anschlagarm 54, wie in Fig. 7 angedeutet, in eine der Vertiefungen der Wellenlinie und verleiht der Kopfstütze in Schwenkanschlagstellung so eine definiert festgelegte Höhenstellung. Die so abgestuften Höhenstellungen der Kulissenführung 64 stimmen mit den Raststellungen der Rastkugel 58 in den Rastmulden 62 überein. Die in Fig. 7 links dargestellte Kulissenbegrenzung weist stärkere Vertiefungen auf. Diese vertieften Rastmulden sollen sicherstellen, daß die Kopfstütze bei Bewegen in ihre hintere Schwenkbegrenzung durch einen Aufprall von vorne in ihrer Höhenstellung verbleibt und sich nicht abwärts bewegen kann.

In Fig. 7 sind zu den einzelnen Höhenraststellungen der Rastkugel 58 die durch die Kulissenführung 64 vorgegebenen Schwenkwinkel für die Kopfstütze angegeben. Die Kulissenführung 64 kann gleichzeitig auch so ausgebildet sein, daß sie auch den obersten und untersten Anschlag für den Anschlagarm 54 bildet und somit die Höhenverstellbarkeit der Kopfstütze begrenzt.

Während bei der Ausführungsform gemäß Fig. 1 die bei einem Aufprall auf die obere Traverse 8 der Kopfstütze aufzufangenden Kräfte nur über den Lagerkörper und die Kanten der unteren Begrenzungsöffnung 32 in die Tragstangen 6 eingeleitet werden können, findet die Krafteinleitung in die Tragstangen 6 bei der hier beschriebenen Ausführungsform gemäß den Fig. 4-7 im wesentlichen unmittelbar von der oberen Traverse 8 über die Anschlagarme 54 in die Tragstangen 6 statt. Der Lagerkörper 50 bei der Ausführungsform gemäß Fig. 4 ist sowohl an seinem Umfang als auch an seiner äußeren Seitenfläche mit Reibelementen 66 bzw. 68 versehen, um einen stärkeren Reibungsschluß zwischen dem Lagerkörper 50 und der Hohlführung 26 sowohl beim Verschwenken wie auch bei der Höhenverstellung der Kopfstütze zu erreichen.

Der Zusammenbau des Rahmenkörpers 2 ist beim Ausführungsbeispiel gemäß den Fig. 4-6 anders ausgebildet als beim Ausführungsbeispiel der Fig. 1. Wie sich aus Fig. 6 erkennen läßt, ist nur die die Kulissenführung 64 enthaltende Innenwand des Hohlraumes 18 eben ausgeführt. Dieser ebene Wandteil des hohlen Seitenschenkels 12 ist einstückig mit der oberen Traverse 8 ausgebildet, während der Rest des hohlen Seitenschenkels 12 als ein schalenartiger Körper ausgebildet ist, der nach Positionieren des Lagerkörpers 50 mit der Tragstange 6 diese Elemente einschließend gegen die ebene innere Seitenwand der Hohlführung 26 zur Anlage gebracht und mit dieser verbunden wird. Auch die untere Traverse ist einstückig mit den ebenen Seitenwänden und der oberen Traverse ausgebildet, so daß sich ein in sich geschlossener, in einem Stück gespritzter Rahmen ergibt, an den nur noch die Außenschalen der hohlen Seitenschenkel 12 angefügt werden müssen, bevor die Anordnung dann mit dem Polstermaterial umspritzt wird.

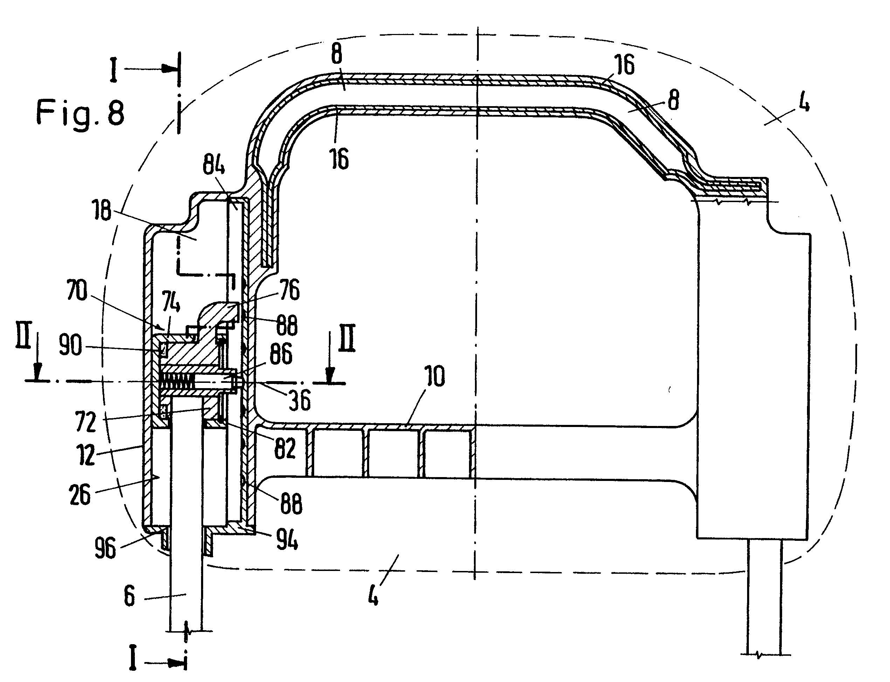

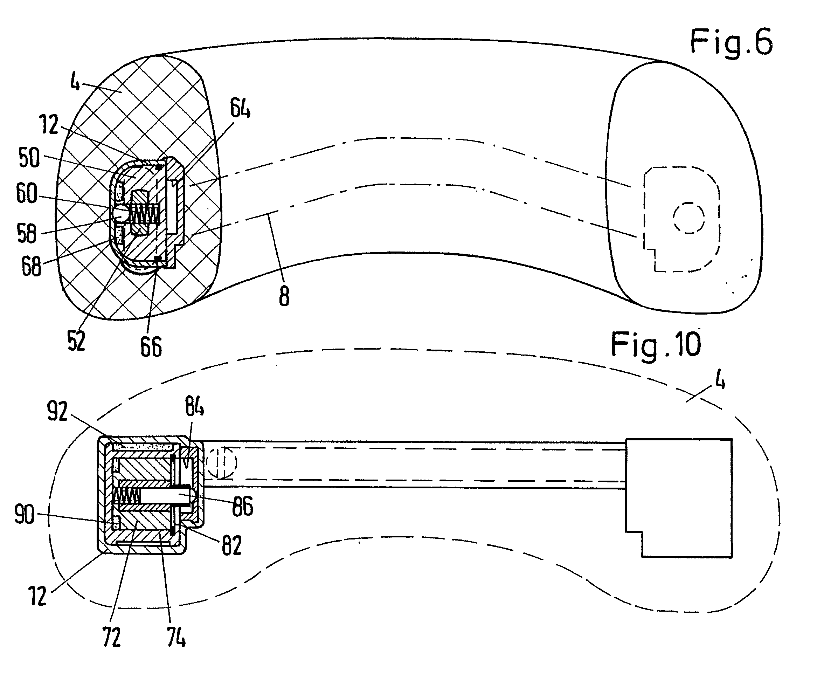

Der Lagerkörper 50 ist auch bei dieser Ausführungsform der Innenkontur der Hohlführung 26 angepaßt. Wie der Lagerkörper 22 des Ausführungsbeispieles nach Fig. 1 braucht er jedoch nicht um die gesamte Schwenkachse 36 herum rotationssymmetrisch ausgebildet zu sein. Es reicht, wenn der rotationssymmetrisch ausgebildete Umfangsanteil so groß ist, daß der erforderliche Schwenkwinkel erreicht wird, wie er als Winkel 34 in Fig. 2 angedeutet ist. Eine dritte Ausführungsform der erfindungsgemäßen Fensterkopfstütze ist in den Fig. 8-10 dargestellt. Der hier verwendete Lagerkörper 70 ist, wie sich aus den rechtwinklig zueinander verlaufenden Vertikalschnitten der Fig. 8 und 9 sowie aus dem Horizontalschnitt der Fig. 10 ergibt, in seiner Außenkontur im wesentlichen quaderförmig ausgebildet, so daß er mit vier Seiten an den Innenwänden der Hohlführung 26 anliegt und daher innerhalb der Hohlführung nicht verdrehbar ist. Um bei dieser Ausführungsform dennoch eine Schwenkbarkeit der Kopfstütze gegenüber den Tragstangen 6 zu erzielen, sind diese an ihrem Ende je mit einem Drehkörper 72 fest verbunden, welcher um die Schwenkachse 36 drehbar im Außenteil 74 des Lagerkörpers 70 gelagert ist. Ein Anschlagarm 76, der dem Anschlagarm 54 nach Fig. 4 entspricht, ist einstückig mit dem Drehkörper 72 des Lagerkörpers 70 ausgebildet und somit fest mit der Tragstange 6 verbunden. Um ein Verschwenken des Drehkörpers 72 innerhalb des in der Hohlführung 26 drehfest angeordneten Außenteils 74 des Lagerkörpers 70 zu ermöglichen, enthält das Außenteil 74 dem maximalen Drehwinkel entsprechende Ausschnitte 78 und 80 für den Anschlagarm 76 und die Tragstange 6.

Aus den Fig. 8 und 10 ist entnehmbar, daß der Drehkörper 72 axial in das Außenteil 74 des Lagerkörpers 70 eingesetzt und durch einen Sprengring 82 in seiner Lage innerhalb des Außenteiles 74 gesichert ist.

Der Anschlagarm 76 greift wie beim Ausführungsbeispiel der Fig. 4 in eine Kulissenführung 84 ein, die ähnlich derjenigen nach Fig. 7 ausgebildet ist. Auch die Ausführungsform der Fig. 8-10 weist eine federbelastete Rasteinrichtung 86 auf, die zentral im Lagerkörper 70 angeordnet ist, deren Rastelement jedoch abweichend von der Ausführungsform nach Fig. 4 zur inneren Seitenwand der Hohlführung 26 hin gerichtet ist. Die zugehörigen Rastmulden 88 befinden sich in der Grundfläche der Kulissenführung 84. Anschlagarm 76 und Rasteinrichtung 86 sind somit an der gleichen Seite der Hohlführung 26 wirksam.

Wie den Fig. 8-10 zu entnehmen ist, ist zur Erhöhung des Reibungsschlusses zwischen den gegeneinander bewegten Teilen einerseits zwischen dem Drehkörper 72 und dem Außenteil 74 des Lagerkörpers 70 ein Reibelement 90 vorgesehen, welches als Reibring in die eine Stirnseite des Drehkörpers 72 eingelassen ist, und andererseits befindet sich ein weiteres Reibelement 92 an einer Außenseite des Lagerkörpers 70, um den Reihungsschluß zu der Hohlführung 26 zu erhöhen.

Montagemäßig weist die Ausführungsform der Fig. 8-10 die Besonderheit auf, daß der Rahmenkörper auch hier im wesentlichen als ein Stück aus Kunststoff gespritzt ist. Die Kulissenführung 84, die auch die Rastmulden 88 für die Rasteinrichtung enthält, ist jedoch als ein Einschubteil 94 ausgebildet, welches einstückig mit der die Durchtrittsöffnung für die Tragstange 6 enthaltenden unteren Abschlußwand 96 für den Hohlraum 18 ausgebildet ist. Die gesamte Baugruppe, bestehend aus Lagerkörper 70, Tragstange 6 und Einschubteil 94 wird beim Zusammenbau als Ganzes in den hohlen Seitenschenkel 12 von unten eingeschoben, und die untere Abschlußwand 96 dann mit dem Gehäuse des hohlen Seitenschenkels 12 verbunden.

Auch bei der Ausführungsform der Fig. 8 enthält die obere Traverse 8 eine Hohlprofilarmierung 16. Es sind in der Fig. 8 zwei verschiedene Möglichkeiten dargestellt, wie die Enden dieser Hohlprofilarmierung 16 an der Verbindungsstelle der oberen Traverse mit den hohlen Seitenschenkeln in diesen Übergangsbereich hineingeführt sind.

Es soll noch einmal auf Fig. 1 Bezug genommen werden. Dort enthält die Kopfstütze als unteren Abschluß eine Klemmleiste 98, welche auch die untere Öffnung 32 des Hohlraumes 18 für den Durchtritt der Tragstange 6 enthalten kann. Diese Klemmleiste dient dazu, den Textilbezug für die Kopfstütze an den Kanten seines Einführschlitzes nachträglich festzulegen. Außerdem ist etwa in der Mitte der unteren Traverse 10 eine Bohrung 100 vorgesehen, welche sich auch durch die Klemmleiste 98 erstreckt. Diese Anordnungen und die lösbare Verbindung zwischen der oberen Traverse 8 und den hohlen Seitenschenkeln 12 ermöglichen ein Montage- und Ausschäumverfahren, bei dem zuerst die obere Traverse 8 in den vorgefertigten, nur unten offenen Textilschlauch eingeführt, dann die übrigen Bauteile in den Bezug eingeführt, mit der oberen Traverse 8 verbunden und der Textilbezug schließlich mit seinem Öffnungsschlitz hinter der Klemmleiste 98 am Rahmenkörper festgelegt wird. Durch die Bohrung 100 hindurch kann dann der Polsterkörper 4 innerhalb des Textilbezuges geschäumt werden.

Es sei darauf hingewiesen, daß die in Verbindung mit den einzelnen Ausführungsformen beschriebenen konstruktiven Merkmale auch in anderen Kombinationen miteinander verwendet werden können. Insofern einzelne Teile zum Montieren des Gesamtgegenstandes miteinander zu verbinden sind, so kann dies auf herkömmliche Weise durch Schweißen, Kleben, Nieten, Steck- oder Schraubverbindungen geschehen. Die geeignete Vorgehensweise ist nach den praktischen Erfordernissen auszuwählen.

Die beschriebenen Konstruktionen erfüllen alle Anforderungen, die an eine funktionstüchtige Kopfstütze gestellt werden. Die Anordnungen lassen sich in gleicher Weise für Vollkörperkopfstützen wie auch für Rahmenkopfstützen mit innerem Fenster verwenden. Die Verstellgeometrie der Konstruktion ermöglicht eine Höhenverstellung von 60 bis 80 mm und eine Neigungsverstellung zwischen etwa 15 und 45˚, wobei bei zunehmender Verstellhöhe ein größerer Schwenkbereich in den Neigungswinkeln möglich ist. Durch geeignete Kulissenführungen eines Anschlagarmes kann die Verstellbarkeit für jede Höhenstufe speziell gewählt werden. Die Höhenverstellung selbst kann in gleichen Verstellschritten ausgeführt werden, wobei die Stufensprünge markant von Hand fühlbar sind, ohne daß große Kraftspitzen aufgewendet werden müßten. Es können Vorkehrungen dafür getroffen sein, daß die Kopfstütze in der hinteren Aufschlagstellung vornehmlich in den oberen Höhenpositionen nicht abrutschen kann. Die Gesamtkonstruktion läßt sich raumsparend ausführen, weswegen sie besonders auch für Fensterkopfstützen geeignet ist und dennoch genügend Raum für den Polsterteil beläßt. Auch läßt die raumsparende Konstruktion einen genügenden Spielraum für individuelles Styling.

**Ansprüche**

1. Höhen- und neigungsverstellbare Kopfstütze für Kraftfahrzeugsitze mit einem gegebenenfalls von einem Polsterkörper und einem Polsterbezug umgebenen Rahmenkörper, der zwei seitlich beabstandete, nach unten offene und sich im wesentlichen nach oben in den Rahmenkörper erstreckende Hohlräume aufweist, sowie mit zwei an der Rückenlehne des Kraftfahrzeugsitzes befestigbaren Tragstangen, die mit ihren oberen Enden in die Hohlräume hineinragend in diesen verschiebbar geführt sind, und an denen der Rahmenkörper um eine im wesentlichen horizontale, parallel zu der die Tragstangen enthaltenden Ebene verlaufende Schwenkachse begrenzt verschwenkbar ist, wofür die unteren Öffnungen der Hohlräume in einer Richtung senkrecht zur Ebene der Tragstangen ein lichtes Öffnungsmaß aufweisen, das größer ist als die Dicke der Tragstangen in dieser Richtung, dadurch gekennzeichnet, daß die Tragstangen (6) an ihren oberen Enden (24, 52) je mit einem Lagerkörper (22, 50, 70) versehen sind, welcher formschlüssig an den eine Hohlführung (26) für den Lagerkörper (22, 50, 70) bildenden Innenwänden des zugehörigen Hohlraumes (18) anliegend in diesem höhenverschiebbar ist, und daß die im wesentlichen horizontale Schwenkachse (36) im Verhältnis sowohl zu den Tragstangen (6) als auch den Lagerkörpern (22, 50, 70) eine unveränderliche Position aufweist.

2. Kopfstütze nach Anspruch 1, dadurch gekennzeichnet, daß der Lagerkörper (22, 50) unbeweglich mit dem oberen Ende (24, 52) der Tragstange (6) verbunden ist.

3. Kopfstütze nach Anspruch 1 oder 2, dadurch gekennzeichnet, daß diese im wesentlichen horizontale Schwenkachse (36) durch die in Längserstreckung der Hohlführung (26) gerichteten Mittellinien der Hohlführungen (26) verläuft, und daß die Lagerkörper (22, 50) zumindest insoweit der vorgesehene Schwenkbereich der Kopfstütze dies erfordert, rotationssymmetrisch zur Schwenkachse (36) ausgeführt sind und mit Mantellinien dieser rotationssymmetrischen Bereiche formschlüssig an den vorderen und hinteren Innenwänden der Hohlführungen (26) anliegen.

4. Kopfstütze nach Anspruch 3, dadurch gekennzeichnet, daß der Lagerkörper (22) in seinem an der vorderen und hinteren Innenwand der Hohlführung (26) zur Anlage kommenden, rotationssymmetrischen Bereich, und diese vordere und hintere Innenwand mit zur Schwenkachse (36) parallelen Rastrillen (42) bzw. entsprechenden Erhöhungen versehen sind, deren gegenseitiger Eingriff für Höhenverstellung und Verschwenken der Kopfstütze durch Handbetätigung überwindbar ist.

5. Kopfstütze nach einem der Ansprüche 2-4, dadurch gekennzeichnet, daß die Lagerkörper (22, 50, 70) in einer Richtung senkrecht zur Schwenkachse (36) mit im wesentlichen ebenen Anlageflächen versehen sind, mit denen sie an parallelen Seitenwandflächen der Hohlführungen (26) anliegen.

6. Kopfstütze nach Anspruch 1, dadurch gekennzeichnet, daß der Lagerkörper (70) mit zu seiner Verschieberichtung parallelen bzw. prismatischen Außenflächen versehen ist, mit denen er drehfest an den Innenwänden der Hohlführung (26) anliegend in dieser verschiebbar ist, und daß er einen um die im wesentlichen horizontale Schwenkachse (36) verschwenkbar gelagerten Drehkörper (72) enthält, der fest mit der zugehörigen Tragstange (6) verbunden ist.

7. Kopfstütze nach einem der Ansprüche 1-3 und 5-6, dadurch gekennzeichnet, daß zwischen Lagerkörper (50, 70) und einer Innenwand der Hohlführung (26) eine federbelastete Rasteinrichtung (58, 60; 86) vorgesehen ist, die in bestimmten Höhenabstufungen fühlbar einrastet und durch Handbetätigung überwindbar ist.

8. Kopfstütze nach Anspruch 7, dadurch gekennzeichnet, daß die Rasteinrichtung (58, 60; 86) ein Rastelement wie eine Kugel (58) oder ein Stift ist, welches abgestützt auf einer Feder (60) in einer Blindbohrung (56) des Lagerkörpers (50) ruht, und daß die dem Rastelement (58) gegenüberliegende Innenwand der Hohlführung (26) im Abstand Einrastvertiefungen (62) aufweist.

9. Kopfstütze nach einem der Ansprüche 1-8, dadurch gekennzeichnet, daß entweder mindestens ein Tragarm (6) innerhalb seiner Hohlführung (26) oder der verschwenkbare Teil (72) mindestens eines der Lagerkörper (70, 72) mit einem Anschlagarm (54, 76) zur Begrenzung des Schwenkbereiches des Rahmenteiles (2) versehen ist, welcher in eine Kulissenführung (64, 84) an einer Seitenwand der Hohlführung (26) eingreift.

10. Kopfstütze nach Anspruch 9, dadurch gekennzeichnet, daß der Eingriffspunkt des Anschlagarmes (54, 76) in der Kulissenführung (64, 84) oberhalb des Lagerkörpers (50, 70) liegt.

11. Kopfstütze nach Anspruch 9 oder 10, dadurch gekennzeichnet, daß die vordere Kontur der Kulissenführung (64) mit in Höhenabstufung angeordneten Vertiefungen für den Eingriff des Anschlagarmes (54) versehen ist, die bei maximalem Schwenkausschlag nach hinten eine Abwärtsbewegung der Kopfstütze verhindert.

12. Kopfstütze nach Anspruch 11, dadurch gekennzeichnet, daß auch die rückseitige Kulissenkontur mit höhenpositionsfestlegenden Vertiefungen versehen ist.

13. Kopfstütze nach Anspruch 11 oder 12 in Verbindung mit Anspruch 7 oder 8, dadurch gekennzeichnet, daß die Vertiefungen der Kulissenführung (64) mit den Höhenpositionen (62, 88) der Rasteinrichtung übereinstimmen.

14. Kopfstütze nach einem der Ansprüche 9-13, dadurch gekennzeichnet, daß die Kulissenführungen (64, 84) Anschläge für die höchste und/oder tiefste Kopfstützenstellung enthalten.

15. Kopfstütze nach einem der Ansprüche 1-14, dadurch gekennzeichnet, daß die Anschläge für die tiefste Stellung der Kopfstütze durch eine an der Unterseite des Rahmenkörpers (2) vorgesehene Spannleiste (98) gebildet werden, die gleichzeitig dem Festspannen des Kopfstützenbezuges dient.

16. Kopfstütze nach einem der Ansprüche 1-15, dadurch gekennzeichnet, daß der Lagerkörper (22) in seinem an den Innenwänden der Hohlführung (26) anliegenden Außenbereich zumindest teilweise aus einem elastischen Material (40) besteht und unter Preßsitz in die Hohlführung (26) eingesetzt ist.

17. Kopfstütze nach einem der Ansprüche 1-16, dadurch gekennzeichnet, daß an den Berührungs- bzw. Reibflächen zwischen Lagerkörper (50, 70) und Hohlführung (26) und/oder gegebenenfalls an den Reibflächen zwischen Drehkörper (72) und Lagerkörper (70, 74) reibungserhöhende Materialelemente (66, 68, 90, 92) vorgesehen sind.

18. Kopfstütze nach einem der Ansprüche 1-17, dadurch gekennzeichnet, daß sie als Fensterstütze ausgebildet ist und die Hohlführungen (26) Rahmenteile (12) bilden, die jeweils durch eine obere (8) und eine untere (10) Traverse miteinander verbunden sind.

19. Kopfstütze nach Anspruch 18, dadurch gekennzeichnet, daß die obere Traverse (8) ein Versteifungsrohr (16) enthält.

20. Kopfstütze nach Anspruch 18 oder 19, dadurch gekennzeichnet, daß die obere Traverse (8) ein selbständiges, mit den Hohlführungen (26) verbindbares Teil bildet, welches innerhalb eines Bezugsschlauches für die Kopfstütze mit den seitlichen Hohlführungen verbindbar ist.

21. Kopfstütze nach Anspruch 20, dadurch gekennzeichnet, daß die untere Traverse (10) und gegebenenfalls die Spannleiste (98) eine Bohrung (100) zum Schäumen des Polsterkörpers enthalten.

## Claims

1. A headrest with height and angle adjustment for vehicle seats, with a frame, possibly surrounded by cushioning and an upholstery cover, which has two cavities at the sides which are open at the bottom and basically extend up into the frame, and also with two support legs which can be attached to the back of the vehicle seat, the tops of which are positioned such that they project into the cavities and can be moved in these, and at which the frame has a limited swivel range around an essentially horizontal swivel axis running parallel to the plane containing the support legs; for this reason the lower openings in the cavities have an inside dimension in a direction perpendicular to the plane of the support legs which is greater than the thickness of the support legs in this direction, characterised by the fact that the ends (24, 52) of the support legs (6) each have a bearing element (22, 50, 70) which is in positive contact with the inner walls of the associated cavity (18) which form an open guideway (26) for the bearing element (22, 50, 70) , and is height-adjustable within thin cavity, and that the mainly horizontal swivel axis (36) maintains a constant position in relation to both the support legs (6) and the bearing elements (22, 50, 70).

2. Headrest according to claim 1, characterised by the fact that the bearing element (22, 50) is rigidly attached to the top (24, 52) of the support leg (6).

3. Headrest according to claim 1 or 2, characterised by the fact that this essentially horizontal swivel axis (36) runs through the centre lines of the open guideways (26) aligned in the longitudinal extension of the open guideway (26), and that the bearing elements (22, 50) are rotationally symmetrical in relation to the swivel axis (36), at least insofar as the headrest's anticipated swivel range requires this, and are in positive contact with the front and rear inner walls of the open guideways (26) with surface lines of these rotationally symmetrical areas.

4. Headrest according to claim 3, characterised by the fact that the rotationally symmetrical part of the bearing element (22) is adjacent to the front and rear inner walls of the open guideway (26) and these front and rear inner walls are provided with locking grooves (42) running parallel to the swivel axis (36) or corresponding raised areas which lock into one another and can be disengaged by hand to adjust the height and angle of the headrest.

5. Headrest according to one of the claims 2-4, characterised by the fact that the bearing elements (22, 50, 70) have essentially even contact surfaces in a direction running perpendicular to the swivel axis (36) which lie adjacent to the parallel side wall surfaces of the open guideways (26).

6. Headrest according to claim 1, characterised by the fact that the bearing element (70) is equipped with outer surfaces which are prismatic or parallel to its direction of movement and with which it can be moved in the open guideway (26), being adjacent to the inner walls of the same and prevented from turning, and that it contains a rotating element (72) which is swivel-mounted around the essentially horizontal swivel axis (36) and which is firmly connected to the associated support leg (6).

7. Headrest according to one of the claims 1-3 and 5-6, characterised by the fact that a spring-loaded locking mechanism (58, 60; 86) is provided between the bearing element (50, 70) and an inner wall of the open guideway (26), which can be felt to be engaging at specific height intervals and can be disengaged by hand.

8. Headrest according to claim 7, characterised by the fact that the locking mechanism (58, 60; 86) is a locking element like a ball (58) or a pin, which is mounted on a spring (60) and is located in a blind bore (56) in the spring element (50), and that the inner wall of the open guideway (26) opposite the locking element (58) has locking indentations (62) at intervals.

9. Headrest according to claims 1-8, characterised by the fact that either at least one support leg (6) within its open guideway (26) or the swivel part (72) of at least one of the bearing elements (70, 72) is equipped with a stop arm (54, 76) to limit the swivel range of the frame section (2), which locks into a link guideway (64, 84) on a side wall of the open guideway (26).

10. Headrest according to claim 9, characterised by the fact that the point at which the stop arm (54, 76) locks into the link guideway (64, 34) lies above the bearing element (50, 70).

11. Headrest according to claim 9 or 10, characterised by the fact that the front profile of the link guideway (64) contains indentations at graduated heights into which the stop arm (54) can lock, preventing the headrest from dropping down as a result of a maximum swivel impact from the front.

12. Headrest according to claim 11, characterised by the fact that the rear profile of the link guideway also contains indentations which govern the height setting.

13. Headrest according to claim 11 or 12 in conjunction with claim 7 or 8, characterised by the fact that the indentations in the link guideway (64) coincide with the height settings (62, 88) of the locking mechanism.

14. Headrest according to one of the claims 9-13, characterised by the fact that the link guideways (64, 84) contain limit stops for the highest and/or lowest headrest position.

15. Headrest according to one of the claims 1-14, characterised by the fact that the limit stops for the lowest headrest position are formed by a clamping strip (98) provided on the bottom of the frame (2) which at the same time serves to anchor the headrest cover.

16. Headrest according to one of the claims 1-15, characterised by the fact that the outer section of the bearing element (22) which is adjacent to the inner walls of the open guideway (26) is made at least partially from a flexible material (40) and is inserted in the open guideway (26) by force-fitting.

17. Headrest according to one of the claims 1-16, characterised by the fact that material elements which increase friction (66, 68, 90, 92) are provided on the contact or friction surfaces between the bearing element (50, 70) and the open guideway (26) and/or if necessary on the friction surfaces between the rotating element (72) and the bearing element (70, 74).

18. Headrest according to one of the claims 1-17, characterised by the fact that it is designed as a window headrest and the open guideways (26) form frame sections (12) which are each interconnected by an upper (8) and a lower (10) cross bar.

19. Headrest according to claim 18, characterised by the fact that the upper cross bar (8) contains a reinforcement pipe (16).

20. Headrest according to claim 18 or 19, characterised by the fact that the upper cross bar (8) forms an independent part which can be connected to the open guideways (26) and which can be attached to the open guideways on the sides inside a tubular cover for the headrest.

21. Headrest according to claim 20, characterised by the fact that the lower cross bar (10) and, if necessary, the clamping strip (98) contain a hole (100) through which the cushion is foamed.

## Revendications

1. Appuie-tête réglable en hauteur et en inclinaison pour siège de véhicule automobile, comprenant un corps de châssis qui est éventuellement entouré d'un corps de rembourrage et d'un revêtement de rembourrage et qui présente deux cavités situées latéralement à distance, ouvertes vers le bas et s'étendant sensiblement vers le haut dans le corps de châssis, ainsi que deux tiges de support qui peuvent être fixées sur le dossier du siège de véhicule et sont, par leur extrémité supérieure, guidées à l'intérieur des cavités de manière à pouvoir coulisser dans celles-ci et sur lesquelles le corps de châssis est capable de pivoter de manière limitée autour d'un axe de pivotement sensiblement horizontal qui s'étend parallèlement au plan comportant les tiges de support, les ouvertures inférieures des cavités présentant dans une direction perpendiculaire au plan des tiges de support une dimension d'ouverture libre qui est plus grande que l'épaisseur des tiges de support dans cette direction, caractérisé en ce que les tiges de support (6) sont, à leur extrémité supérieure (24, 52), pourvues chacune d'un corps de support (22, 50, 70) qui, en prenant appui avec formation d'une liaison de forme sur les parois internes de la cavité correspondante (18), qui forment un guidage creux (26) pour le corps de support (22, 50, 70), est capable de coulisser en hauteur dans cette cavité et en ce que l'axe de pivotement (36) sensiblement horizontal présente une position inchangée tant par rapport aux tiges de support (6) que par rapport aux corps de support (22, 50, 70).

2. Appuie-tête suivant la revendication 1, caractérisé en ce que le corps de support (22, 50) est relié de manière fixe à l'extrémité supérieure (24, 52) de la tige de support (6).

3. Appuie-tête suivant l'une des revendications 1 et 2, caractérisé en ce que cet axe de pivotement (36) sensiblement horizontal passe par les lignes médianes des guidages creux (26), qui sont orientées dans l'extension longitudinale des guidages creux (26), et en ce que les corps de support (22, 50) sont réalisés avec une symétrie de révolution par rapport à l'axe de pivotement (36) au moins dans la mesure où la zone de pivotement prévue de l'appuie-tête exige cela, et en ce que, par les génératrices de ces zones à symétrie de révolution, ils sont en appui sur les parois internes avant et arrière des guidages creux (26) de manière à réaliser une liaison par la forme.

4. Appuie-tête suivant la revendication 3, caractérisé en ce que le corps de support (22) dans sa zone à symétrie de révolution, qui vient en appui sur la paroi interne avant et arrière du guidage creux (26), et ces parois internes avant et arrière sont pourvus de rainures d'encliquetage (42) parallèles à l'axe de pivotement et respectivement de surélévations correspondantes, dont la prise mutuelle en vue du réglage en hauteur et du pivotement de l'appuie-tête peut être surmontée par un actionnement à la main.

5. Appuie-tête suivant l'une des revendications 2 à 4, caractérise en ce que les corps de support (22, 50, 70) sont, dans une direction perpendiculaire à l'axe de pivotement (36), pourvus de surfaces d'appui sensiblement planes par lesquelles ils sont en appui sur des surfaces de paroi latérale parallèles des guidages creux (26).

6. Appuie-tête suivant la revendication 1, caractérisé en ce que le corps de support (70) est pourvu de surfaces externes parallèles à sa direction de coulissement ou respectivement prismatiques avec lesquelles il est capable de coulisser dans le guidage creux (26) sans possibilité de rotation, en prenant appui sur les parois internes de ce dernier, et en ce qu'il comporte un corps de rotation (72) qui est supporté de manière à pouvoir pivoter autour de l'axe de pivotement (36) sensiblement horizontal et qui est relié de manière fixe à la tige de support correspondante (6).

7. Appuie-tête suivant l'une des revendications 1 à 3 et 5 et 6, caractérisé en ce que, entre le corps de support (50, 70) et une paroi interne du guidage creux (26), il est prévu un dispositif d'encliquetage sollicité par ressort (58, 60 ; 86) qui s'encliquète de manière perceptible dans des paliers déterminés en hauteur et qui peut être surmonté par un actionnement à la main.

8. Appuie-tête suivant la revendication 7, caractérisé en ce que le dispositif d'encliquetage (58, 60 ; 86) est un élément d'encliquetage tel qu'une bille (58) ou une goupille, qui, en appui sur un ressort (60), repose dans un trou borgne (56) du corps de support (50) et en ce que la paroi interne, opposée à l'élément d'encliquetage (58), du guidage creux (26) présente à distances des évidements d'encliquetage (62).

9. Appuie-tête suivant l'une des revendications 1 à 8, caractérisé en ce qu'au moins un bras de support (6) à l'intérieur de son guidage creux (26) ou la partie capable de pivoter (72) d'au moins un des corps de support (70, 72) est pourvu d'un bras de butée (54, 76) pour limiter la zone de pivotement de la pièce de châssis (2), ce bras pénétrant dans une coulisse (64, 84) prévue sur une paroi latérale du guidage creux (26).

10. Appuie-tête suivant la revendication 9, caractérisé en ce que le point de pénétration du bras de butée (54, 76) dans la coulisse (64, 84) est situé au-dessus du corps de support (50, 70).

11. Appuie-tête suivant l'une des revendications 9 et 10, caractérisé en ce que le contour avant de la coulisse (64) est pourvu d'évidements disposés suivant un échelonnement en hauteur pour la pénétration du bras de butée (54) qui empêche, lors d'une amplitude maximale du pivotement vers l'arrière, un mouvement vers le bas de l'appuie-tête.

12. Appuie-tête suivant la revendication 11, caractérisé en ce que le contour du côté dos de la coulisse est également pourvu d'évidements fixant la position en hauteur.

13. Appuie-tête suivant l'une des revendications 11 et 12, en combinaison avec l'une des revendications 7 et 8, caractérisé en ce que les évidements de la coulisse (64) concordent avec les positions en hauteur (62, 88) du dispositif d'encliquetage.

14. Appuie-tête suivant l'une des revendications 9 à 13, caractérisé en ce que les coulisses (64, 88) comportent des butées pour la position la plus élevée et/ou la plus basse de l'appuie-tête.

15. Appuie-tête suivant l'une des revendications 1 à 14, caractérisé en ce que les butées pour la position la plus basse de l'appuie-tête sont formées par une barre de serrage (98) qui est prévue sur le côté inférieur du corps de châssis (2) et qui sert simultanément à la fixation du revêtement d'appuie-tête.

16. Appuie-tête suivant l'une des revendications 1 à 15, caractérisé en ce que le corps de support (22) est au moins partiellement constitué d'une matière élastique (40) dans sa zone externe en appui sur les parois internes du guidage creux (26) et en ce qu'il est enfoncé dans le guidage creux avec un ajustage serré.

17. Appuie-tête suivant l'une des revendications 1 à 16, caractérisé en ce que des éléments en matière augmentant le frottement (66, 68, 90, 92) sont prévus sur les surfaces de contact et respectivement de frottement entre le corps de support (50, 70) et le guidage creux (26) et/ou éventuellement sur les surfaces de frottement entre le corps de rotation (72) et le corps de support (70, 74).

18. Appuie-tête suivant l'une des revendications 1 à 17, caractérisé en ce qu'il est réalisé sous la forme d'un appui ajouré et en ce que les guidages creux (26) forment des parties de châssis (12) qui sont mutuellement reliées par une traverse supérieure (8) et une inférieure (10).

19. Appuie-tête suivant la revendication 18, caractérisé en ce que la traverse supérieure (8) comporte un tube de renforcement (16).

20. Appuie-tête suivant l'une des revendications 18 et 19, caractérisé en ce que la traverse supérieure (8) forme une pièce autoportante, qui peut être reliée aux guidages creux (26) et qui peut être reliée, à l'intérieur d'un tuyau souple de revêtement pour l'appuie-tête, aux guidages creux latéraux.

21. Appuie-tête suivant la revendication 20, caractérisé en ce que la traverse inférieure (10) et éventuellement la barre de serrage (98) comportent un trou (100) pour le moussage du corps de rembourrage.

Fig.2

Fig.1

Fig.3

EP 0 283 863 B1

Fig. 4

EP 0 283 863 B1

# Fig. 5

# Fig. 7

# Fig. 9

| | |
|---|---|
| a | 14–16° |
| b | 17–19° |
| c | 20–22° |
| d | 23–25° |
| e | 26–28° |
| f | 33–35° |
| g | 44–46° |

EP 0 283 863 B1

Fig. 8

Fig.6

Fig.10